# EUROPEAN PATENT SPECIFICATION

(11) **EP 1 860 455 B1**
(45) Date of publication and mention of the grant of the patent: **27.05.2009**
(21) Application number: 07018112.8
(22) Date of filing: 19.06.2006
(51) Int. Cl.: G01S 5/10, G01S 5/02

(54) **Position measuring system and method using wireless broadband (WIBRO) signal**
System und Verfahren zur Positionsmessung mittels drahtlosem Breitbandsignal (WiBro)
Système de mesure de la position et procédé utilisant un signal de bande passante sans fil (WIBRO)

(30) Priority: 04.07.2005 KR 20050059931; 18.04.2006 KR 20060035152
(43) Date of publication of application: 28.11.2007
(62) Divisional of application: 06012512.7
(73) Proprietor: Samsung Electronics Co., Ltd., Suwon-si, Gyeonggi-do 442-742 (KR); Seoul National University Industry Foundation, Seoul (KR)
(72) Inventor: Hyun, Moon-Pil, Suwon-si, Gyeonggi-do (KR); Jung, Hee, Suwon-si, Gyeonggi-do (KR); Kim, Jin-Won, Suwon-si, Gyeonggi-do (KR); Hong, Hyun-Su, Suwon-si, Gyeonggi-do (KR); Lee, Jang-Gyu, Gwanak-gu, Seoul (KR)
(74) Representative: Grünecker, Kinkeldey, Stockmair & Schwanhäusser Anwaltssozietät

(56) References cited:
- WO-A-02/17669
- US-A1- 2005 020 309
- US-B1- 6 230 018
- US-B1- 6 356 763

## Description

The present invention generally relates to a Wireless Broadband (WiBro) system, and in particular, to a system and method for measuring the position of a terminal in a WiBro system.

Generally, when a mobile station moves from a cell of a serving base station (or sector) to a cell of a target base station (or sector), a mobile communication system performs a hand-over (or hand-off) in which a communication path is switched to the cell of the target base station using a specific signal to continue communication.

For example, in a Code Division Multiple Access (CDMA) system, a range between a base station and a terminal is calculated using a Round Trip Delay (RTD) signal transmitted from the base station to the terminal and a hand-over to a base station that is nearest to the terminal is performed. This method is based on the fact that in a context where all base stations operate with the same absolute time, if it takes time t for a signal from a base station to arrive in a terminal, it also takes time t for the terminal to send a signal to the base station (communication paths for transmission/reception are the same) and thus a signal delay between the terminal and the base station is 2t.

The RTD is based on the distance between the base station and the terminal. Thus, the RTD can be used for not only a hand-over but also measurement of the position of the terminal. However, to measure the position of the terminal using the RTD, a single base station needs to measure RTDs for at least three terminals, or at least three base stations needs to simultaneously receive a signal from a single terminal.

Thus, in terminal position measurement using the RTD, a clock error between terminals may occur and a base station needs to then have a new positioning algorithm. As a result, the current CDMA system has difficulty in measuring the position of a terminal using the RTD.

US 6,356,763 describes that a mobile communication station in a wireless communication network is used to measure the respective times of arrival of radio signals respectively transmitted by a plurality of radio transmitters in the network. The mobile communication station is provided with real time difference information indicative of differences between a time base used by a radio transmitter serving the mobile communication station and respective time bases used by the other radio transmitters. The mobile communication station determines, in response to the real time difference information and relative to the time base used by the radio transmitter serving the mobile communication station, a plurality of points in time at which the respective radio signals are expected to arrive at the mobile communication station. For each radio signal, the mobile communication station monitors for arrival of the radio signal during a period of time after the point in time at which the radio signal is expected to arrive.

WO 02/17669 A1 provides a method for positioning a mobile station applying a principle based on signal propagation time differences so that the method uses in the radio signal propagation time measurement those base stations which either do not have functioning repeaters in their coverage areas or, if there are not enough such base stations, the base station delays will be compensated for.

In a Wireless Broadband (WiBro) system, a hand-over between a base station and a terminal is performed using relative delay information. The relative delay information is used only as a parameter for synchronizing the terminal with a new base station during the hand-over.

The relative delay information is also based on the distance between the terminal and the base station but is not used for measurement of the position of the terminal. Thus, the relative delay may be used for calculation of the position of the terminal.

If the relative delay information is used, the position of the terminal would be more easily measured because it is not necessary for a single base station to measure RTDs for at least three terminals, or for at least three base stations to simultaneously receive a signal from a single terminal.

It is, therefore, the object of the present invention to provide a system and method for measuring the position of a terminal using a hand-over parameter of a WiBro signal.

This object is solved by the subject matter of the independent claims.

Preferred embodiments are defined in the dependent claims.

It is an aspect of the present invention to provide a system and method for measuring the position of a terminal using relative delay information of a WiBro signal.

According to one aspect of the present invention, there is provided a position measuring system using a WiBro signal. The position measuring system includes a main base station for providing information about neighboring base stations and transmitting a neighboring base station scan result from a terminal, the terminal for receiving the information about the neighboring base stations, scanning the neighboring base stations in response to a position measurement request, and transmitting the neighboring base station scan result, and a Position Determination Entity (PDE) for measuring the position of the terminal using relative delay information between the main base station and the neighboring base stations, which is included in the neighboring base station scan result, and base station position information.

According to another aspect of the present invention, there is provided a position measuring system using a WiBro signal. The position measuring system includes a PDE for providing base station position information, a main base station for providing information about neighboring base stations, and a terminal for scanning the neighboring base stations in response to a position measurement request, measuring relative delay information between the main base station and the neighboring base stations, and measuring its position using the relative delay information and the base station position information provided from the PDE.

According to further another aspect of the present invention, there is provided a position measuring method using a WiBro signal. The position measuring method includes a main base station providing to a terminal information about neighboring base stations, the terminal scanning the neighboring base stations and transmitting a neighboring base station scan result to a PDE, and a PDE measuring the position of the terminal using relative delay information between the main base station and the neighboring base stations, which is included in the neighboring base station scan result, and previously stored base station position information.

According to still another aspect of the present invention, there is provided a position measuring method using a WiBro signal. The position measuring method includes a main base station providing to a terminal information about neighboring base stations, the terminal scanning the neighboring base stations and transmitting a neighboring base station scan result to a PDE, and a PDE measuring the position of the terminal using relative delay information between the main base station and the neighboring base stations, which is included in the neighboring base station scan result, and previously stored base station position information.

The above and other objects, features and advantages of the present invention will become more apparent from the following detailed description when taken in conjunction with the accompanying drawings in which:
FIG. 1 illustrates a MOB_SCN_REPORT message in a WiBro system;
FIG. 2 is a diagram used to illustrate relative delay information according to the present invention;
FIG. 3 illustrates a position measuring system using relative delay information according to the present invention;
FIG. 4 is a flowchart illustrating a position measuring method using relative delay information according to a first embodiment of the present invention;
FIG. 5 is a flowchart illustrating a position measuring method using relative delay information according to a second embodiment of the present invention;
FIG. 6 is a flowchart illustrating a position measuring method using relative delay information according to a third embodiment of the present invention;
FIG. 7 is a flowchart illustrating a position measuring method using relative delay information according to a fourth embodiment of the present invention;
FIG. 8 is a flowchart illustrating a position measuring method using relative delay information according to a fifth embodiment of the present invention;
FIG. 9 illustrates the structure of a MOB_NBR_ADV message according to the present invention;
FIG. 10 illustrates the structure of a MOB_SCN_REQ message according to the present invention;
FIG. 11 illustrates the structure of a MOB_SCN_RSP message according to the present invention;
FIG. 12 illustrates the structure of a MOB_SCN_REPORT message according to the present invention;
FIG. 13 is a flowchart illustrating a position measuring method using relative delay information according to a sixth embodiment of the present invention;
FIG. 14 is a flowchart illustrating a position measuring method using relative delay information according to a seventh embodiment of the present invention;
FIG. 15 is a flowchart illustrating a position measuring method using relative delay information according to an eighth embodiment of the present invention;
FIG. 16 is a flowchart illustrating a position measuring method using relative delay information according to a ninth embodiment of the present invention; and
FIG. 17 is a flowchart illustrating a position measuring method using relative delay information according to a tenth embodiment of the present invention.

Preferred embodiments of the present invention will now be described in detail with reference to the annexed drawings. In the following description, a detailed description of known functions and configurations incorporated herein has been omitted for conciseness.

A position measuring system according to the present invention measures the position of a terminal using relative delay information that is a hand-over parameter of a WiBro signal.

In a WiBro system, in a hand-over, a terminal receives neighboring base station information from a main base station, scans its neighboring base stations if it is determined that it is necessary to do so, and transmits the scan result to the main base station through a MOB_SCN_REPORT message that includes the scan result.

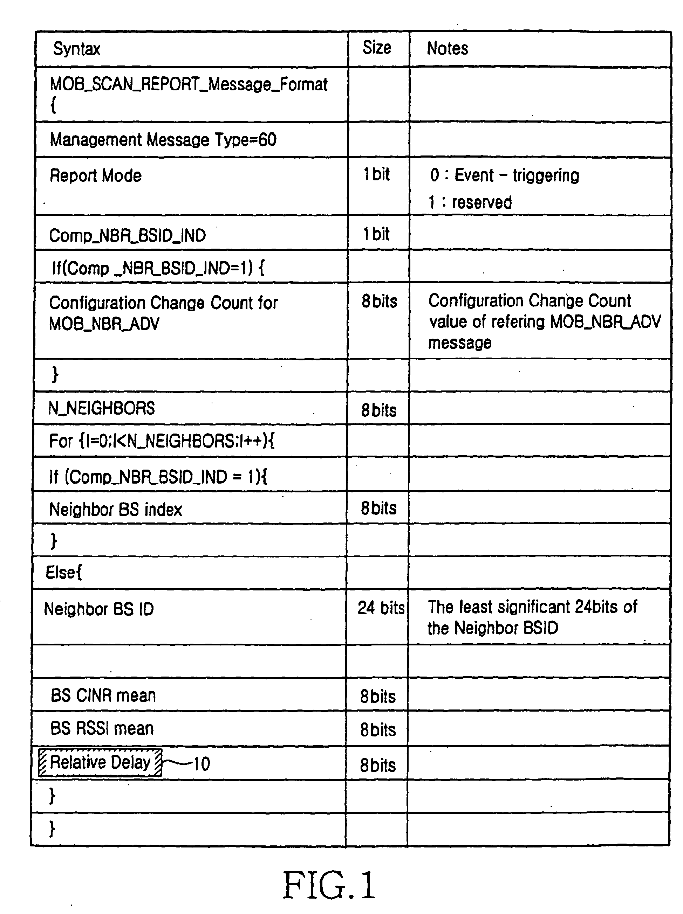

FIG. 1 illustrates the MOB_SCN_REPORT message in the WiBro system. Referring to FIG. 1, the MOB_SCN_REPORT message includes parameters such as Neighbor BS ID, BS CINR mean, BS RSSI mean, and Relative Delay as part of the scan result. Theses parameters are used during a hand-over.

In particular, Relative Delay 10 indicates the relative delay of a downlink signal transmitted from a neighboring base station of a terminal with respect to a downlink signal transmitted from a main base station. In other words, the Relative Delay 10 implies a difference between the time required for the downlink signal of the main base station to arrive in the terminal and the time required for the downlink signal from the neighboring base station to arrive in the terminal.

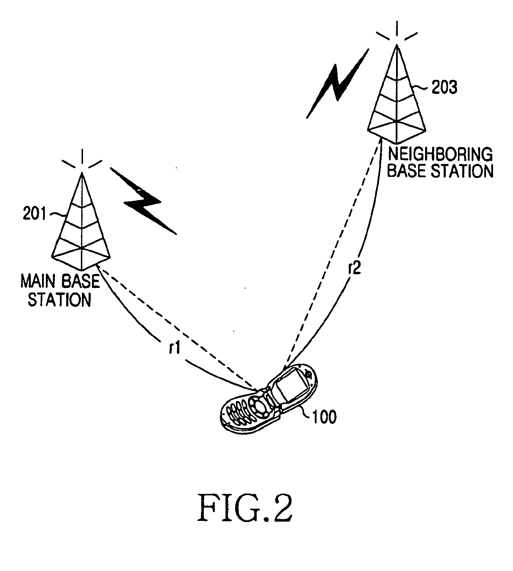

FIG. 2 is a diagram used to illustrate relative delay information according to the present invention.

Referring to FIG. 2, a terminal 100 receives downlink signals from a main base station 201 and a neighboring base station 203. Since a distance r1 between the terminal 100 and the main base station 201 and a distance r2 between the terminal 100 and the neighboring base station 203 are different from each other, the two downlink signals received by the terminal 100 has a signal delay difference corresponding to a distance difference of (r2-r1). Information about the signal delay difference between the main base station 201 and the neighboring base station 203 is the relative delay information.

Thus, the distance difference (r2-r1) can be acquired using the relative delay information.

Therefore, a position measuring system according to the present invention calculates the distance difference, i.e., a difference between a distance between a main base station and a terminal and a distance between a neighboring base station and the terminal, using the relative delay information and measures the position of the terminal using the calculated distance difference.

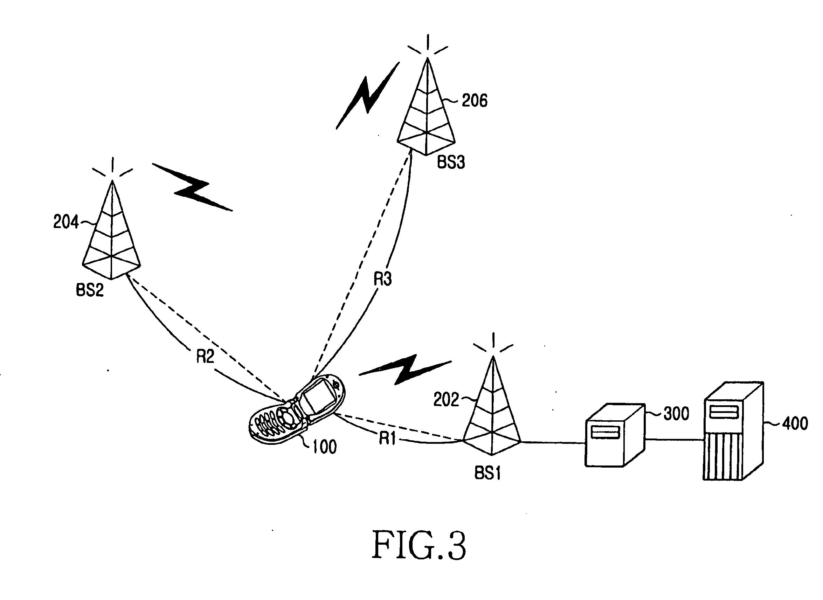

FIG. 3 illustrates a position measuring system using relative delay information according to the present invention. Referring to FIG. 3, the position measuring system includes a terminal 100, a main base station (BS1) 202, neighboring base stations (BS2 and BS3) 204 and 206, a control station 300, and a Position Determination Entity (PDE) 400.

The main base station 202 communicates with the terminal 100 and provides information about the neighboring base stations 204 and 206. The terminal 100 determines whether it is necessary to scan the neighboring base stations 204 and 206 in response to a position measurement request. If it is necessary to scan the neighboring base stations 204 and 206, the terminal 100 transmits to the communicating main base station 202 a request for information required to scan the neighboring base stations 204 and 206, receives the information from the main base station 202, and scans the neighboring base stations 204 and 206. The information required for the scan includes the time required to scan the neighboring base stations 204 and 206, the number of scan operations, and a scan result reporting mode.

After scanning the neighboring base stations 204 and 206, the terminal 100 transmits the scan result to the main base station 202. The scan result includes relative delay information indicating a difference between time T₀ required for a downlink signal of the main base station 202 to arrive in the terminal 100 and time T₁ required for a downlink signal from the neighboring base station 204 to arrive in the terminal 100, a difference between time T₀ and time T₂ required for a downlink signal from the neighboring base station 206 to arrive in the terminal 100, and base station ID information.

The main base station 202 transmits to the control station 300 the scan result from the terminal 100.

The control station 300 delivers the received scan result to the PDE 400.

Upon receipt of the scan result from the control station 300, the PDE 400 extracts the relative delay information and the base station ID information from the received scan result and measures the position of the terminal 100 using the relative delay information and the position information of the base stations 202, 204, and 206 corresponding to the base station ID information.

Referring to FIG. 3, the PDE 400 calculates a distance difference of (R1-R2) between the distance R1 between the main base station 202 and the terminal 100 and the distance R2 between the neighboring base station 204 and the terminal 100, and a distance difference of (R1-R3) between the distance R1 and the distance R3 between the neighboring base station 206 and the terminal 100, each using the relative delay information. The PDE 400 may calculate the position of the terminal 100 using a trigonometric measurement method with the relative delay information and the position information of the base stations 202, 204, and 206 corresponding to the base station ID information. The PDE 400 requires at least two pieces of relative delay information to measure the position of the terminal 100. Although the PDE 400 may calculate the position of the terminal 100 and transmit the calculated position to the terminal 100 as described above, the terminal 100 may measure its position using relative delay information through a position measurement application implemented therein.

As mentioned above, since the position measuring system according to the present invention measures the position of the terminal using relative delay information used in a hand-over, it does not require additional data measurement for positioning and can use a parameter that helps the hand-over for position measurement.

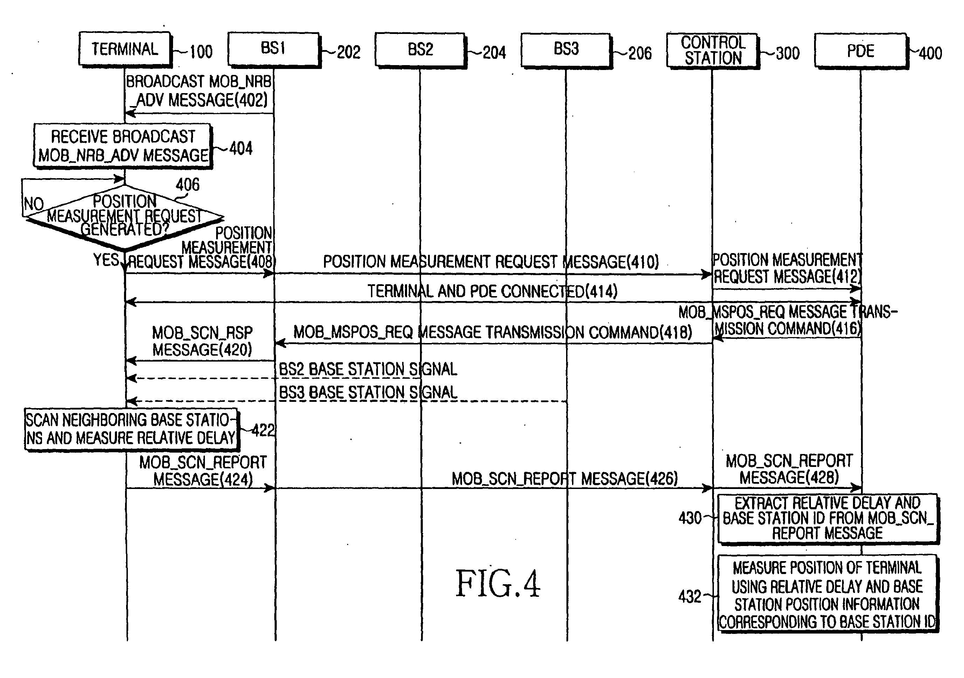

FIG. 4 is a flowchart illustrating a position measuring method using relative delay information according to a first embodiment of the present invention. In FIG. 4, the terminal 100 requests position measurement and, when a WiBro network is used, a position measurement request from the terminal 100 and a neighboring base station scan result are delivered to the PDE 400 through the main base station (BS1) 202 and the control station 300. The main base station (BS1) 202 broadcasts a MOB_NBR_ADV message including information about its neighboring base stations (BS2 and BS3) 204 and 206 in step 402. The MOB_NBR_ADV message may be used when a position measurement request is generated by a need to measure the position of the terminal 100 or a need for the main base station 202 to secure a measurement value required for measuring the position of the terminal 100.

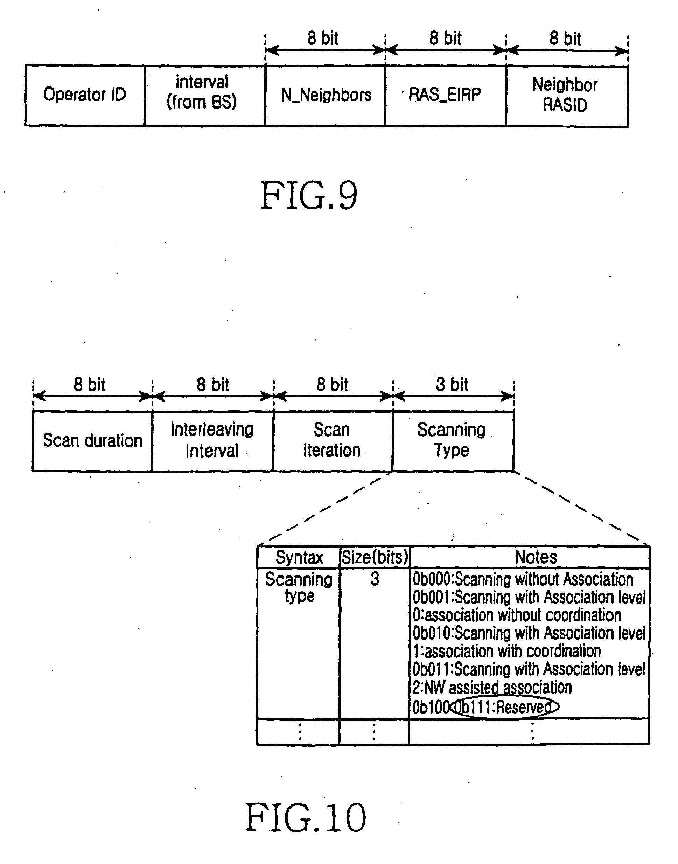

FIG. 9 illustrates the structure of the MOB_NBR_ADV message according to the present invention. Referring to FIG. 9, the MOB_NBR_ADV message includes parameters such as Operator ID, interval (from BS), N_Neighbors, RAS_EIRP, and Neighbor RASID.

Operator ID is a unique network ID used in a cell in which the terminal 100 is registered.

Interval (from BS) is the broadcasting interval of the MOB_NBR_ADV message, i.e., the transmission time interval of the MOB_NRB_ADV message in a Base Station (BS). The transmission time interval of the MOB_NRB ADV message in the BS is up to 1 second.

N_Neighbors, composed of 8 bits, is a value combining a Base Station Identification (BSID), a preamble index, and a Downlink Channel Descriptor (DCD) of a neighboring base station.

Remote Access Server (RAS)_EIRP, composed of 8 bits, is an Effective Isotropic Radiated Power (EIRP) of a neighboring base station and has an integer value ranging between 128 dBm and +127 dBm. When a BS EIRP indicator bit is set to 0 in PHY Profile ID, the EIRP of a neighboring base station is the same as the EIRP of a main base station.

Neighbor RASID is an RAS ID parameter of least significant 24 bits included in a DL-MAP message for a neighboring base station. The Neighbor RASID field is provided only when the first bit of Skip-Optional-Field is 0.

As illustrated in FIG. 9, the MOB_NBR_ADV message includes basic information required for the terminal 100 to scan its neighboring base stations, such as the IDs and number of the neighboring base stations.

Returning again to FIG. 4, the terminal 100 receives the MOB_NBR_ADV message from the main base station 202 in step 404. The terminal 100 can acquire information about its neighboring base stations 204 and 206 from the received MOB_NBR_ADV message.

After receipt of the MOB_NBR_ADV message, the terminal 100 determines if a position measurement request is generated in step 406. The position measurement request may be generated by a need for the terminal 100 to check its position or a need for the main base station 202 to measure the position of the terminal 100. Although the terminal 100 may transmit a position measurement request message after receipt of the MOB_NBR_ADV message as mentioned above, it may also receive the MOB_NBR_ADV message after transmitting the position measurement request message. In other words, the receipt of the MOB_NBR_ADV message may precede or follow the transmission of the position measurement request message.

If the position measurement request is generated, the terminal 100 transmits a position measurement request (MOB_SCN_REQ) message to the main base station 202 in step 408. At this time, the position measurement request message is an MOB_SCN_REQ message for requesting scanning of the neighboring base stations 204 and 206, and the terminal 100 changes a field value of the MOB_SCN_REQ message to indicate that the MOB_SCN_REQ message is not intended for a hand-over, but is intended for position measurement, and transmits the MOB_SCN_REQ message to the main base station 202. For example, the terminal 100 may change code values of a scanning type field into '0b111' to indicate that the MOB_SCN_REQ message is intended for a position measurement.

FIG. 10 illustrates the structure of the MOB_SCN_REQ message according to the present invention. Referring to FIG. 10, the MOB_SCN_REQ message includes parameters such as Scan duration, Interleaving Interval, Scan Iteration, and Scanning type.

Scan duration, composed of 8 bits, indicates a scan period requested by the terminal 100. The scan period may be requested in frame units.

Interleaving Interval indicates a time interval between actual scan periods, which is required for a general communication process between the terminal 100 and the main base station 202.

Scan Iteration indicates the number of scan operations performed by the terminal 100.

In Scanning type, code values required for a hand-over are set as indicated by A. In an embodiment of the present invention, using reserved code values, the code values of Scanning type are changed to those for indicating that the MOB_SCN_REQ message is intended for a position measurement. Although the code values of Scanning type are changed in an embodiment of the present invention, code values of any other field that allows the use of reserved code values may be used.

Returning again to FIG. 4, the main base station 202 transmits the MOB_SCN_REQ message to the control station 300 in step 410. The control station 300 transmits the position measurement request message to the PDE 400 in step 412.

Upon receipt of the position measurement request message from the terminal 100 through the control station 300, the PDE 400 connects to the terminal 100 through the control station 300 in step 414.

The PDE 400 transmits a MOB_MSPOS_REQ message transmission command to the control station 300 in step 416. The MOB_MSPOS_REQ message transmission command is a command for requesting the main base station 202 to transmit an MOB_SCN_RSP message including information for scanning the neighboring base stations 204 and 206 to the terminal 100.

The control station 300 receives the MOB_MSPOS_REQ message transmission command and transmits the received MOB_MSPOS_REQ message transmission command to the main base station 202 in step 418.

The main base station 202 then transmits the MOB_SCN_RSP message to the terminal 100 in step 420. The main base station 202 transmits the MOB_SCN_RSP message to the terminal 100 after changing a specific field of the MOB_SCN_RSP message to indicate that the MOB_SCN_RSP message is intended for position measurement. For example, the main base station 202 changes the code value of Scanning type of the MOB_SCN_RSP message to '0b111'. A reserved code value of another specific field may also be used to indicate that the MOB_SCN_RSP message is intended for position measurement.

The MOB_SCN_RSP message may be directly transmitted from the main base station 202 to the terminal 100 without a need for the MOB_SCN_RSP transmission command from the PDE 400 or the control station 300.

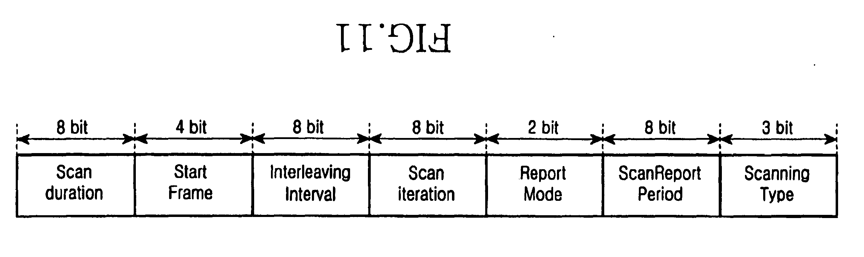

The MOB_SCN_RSP message includes information from the MOB_NBR_ADV message, which is required for scanning neighboring base stations, such as time required for a scan operation, the number of scan operations, and a scan result reporting mode. FIG. 11 illustrates the structure of the MOB_SCN_RSP message according to the present invention. Referring to FIG. 11, the MOB_SCN_RSP message includes parameters such as Scan duration, Start Frame, Interleaving Interval, Scan iteration, Report Mode, Scan Report Period, and Scanning type.

Scan duration, composed of 8 bits, is a parameter indicating a period assigned by the main base station 202 in order for the terminal 100 to scan or associate available neighboring base stations.

Start Frame, composed of 4 bits, is measured from a corresponding frame when the MOB_SCN_RSP message is received. When Start Frame is set to 0, it means that the first scan period of a next frame begins.

Interleaving Interval, composed of 8 bits, indicates an interval between scan operations when the terminal 100 operates normally.

Scan iteration, composed of 8 bits, indicates the number of intervals between scan operations.

Report Mode, composed of 2 bits, indicates a method for reporting a Carrier to Interference and Noise Ratio (CINR) of a neighboring base station measured during a scan period. When Report Mode is 00, it indicates a mode where the terminal 100 merely measures the channel quality of a neighboring Remote Access Server (RAS) without reporting. When Report Mode is 01, it indicates a mode where the terminal 100 reports a channel quality measurement result to the main base station 202 during a scan report period. When Report Mode is 10, it indicates a mode where the terminal 100 reports the channel quality measurement result to the main base station 202 at every channel quality measurement. Report Mode 11 is a reserved mode.

Scan Report Period, composed of 8 bits, indicates a period during which the terminal 100 reports the channel quality measurement result to the main base station 202.

Scanning type, composed of 3 bits, has code values for indicating that the MOB_SCN_RSP message is intended for position measurement.

Returning again to FIG. 4, upon receipt of the MOB_SCN_RSP message, the terminal 100 in step 422 scans the neighboring base stations 204 and 206 using the MOB_NBR_ADV message and the MOB_SCN_RSP message and measures relative delay information for the neighboring base stations 204 and 206 according to the scan result. For example, the terminal 100 scans the neighboring base stations 204 and 206 by receiving a BS2 base station signal from the neighboring base station 204 and a BS3 base station signal from the neighboring base stations 206 according to the information included in the MOB_SCN_RSP message and measures the relative delay information for the neighboring base stations 204 and 206 according to the scan result.

The terminal 100 encapsulates the scan result in an MOB_SCN_REPORT message and transmits the MOB_SCN_REPORT message to the main base station 202 in step 424. The MOB_SCN_REPORT message includes the relative delay information indicating differences in signal arrival between the terminal 100 and its neighboring base stations 204 and 206.

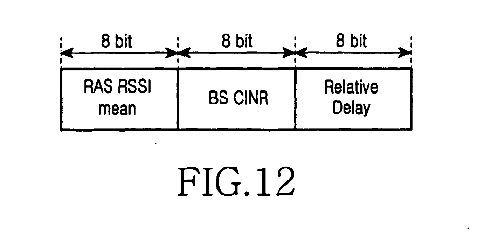

FIG. 12 illustrates the structure of the MOB_SCN_REPORT message according to the present invention. Referring to FIG. 12, the MOB_SCN_REPORT message includes parameters such as RAS RSSI mean, BS CINR, and Relative Delay.

RAS RSSI mean, composed of 8 bits, indicates a Received Signal Strength Indication of a specific base station. RAS RSSI mean is expressed in 0.5dB units and a result of subtracting 40dBm from RAS RSSI mean is the actual signal strength. For example, if RAS RSSI mean is 0xff, it indicates -104dBm and the terminal 100 reports a value ranging between -100dBm and -40dBm. RSSI measurement is performed with respect to a preamble and RAS RSSI mean is acquired by averaging measured RSSIs during a specific period.

BS CINR indicates a CINR received in a terminal from a specific base station. CINR indicates a Carrier to Interference and Noise Ratio (CINR) from a base station. BS CINR is expressed in 0.5dB units and is interpreted as a byte having a sign. CINR measurement is performed with respect to a preamble and BS CINR is acquired by averaging measured CINRs during a specific period.

Relative Delay, composed of 8 bits, indicates a relative delay between downlink signals of the main base station 202 and the neighboring bas stations 204 and 206.

Returning again to FIG. 4, the control station 300 transmits the received MOB_SCN_REPORT message to the PDE 400 in step 428.

The PDE 400 extracts the relative delay information for the neighboring base stations 204 and 206 and the base station ID information from the MOB_SCN_REPORT message received from the control station 300 in step 430 and measures the position of the terminal 100 using the relative delay information and position information of the base stations 202, 204, and 206 corresponding to the base station ID information in step 432. In other words, the PDE 400 acquires a difference between a distance between the terminal 100 and the neighboring base station 204, and a distance between the terminal 100 and the neighboring base station 206, using the relative delay information, and measures the position of the terminal 100 using a trigonometric measurement method with the relative delay information and the position information of the base stations 202, 204, and 206. At this time, the PDE 400 requires at least two pieces of relative delay information to measure the position of the terminal 100. The relative delay information includes information indicating the relative delay information of the base stations.

After calculating the position of the terminal 100, the PDE 400 may transmit the calculated position to the main base station 202 and/or the terminal 100 to allow the main base station 202 and/or the terminal 100 to know the position of the terminal 100, if necessary. The main base station 202 may use the calculated position to be synchronized with the terminal 100 when a hand-over is required for the terminal 100.

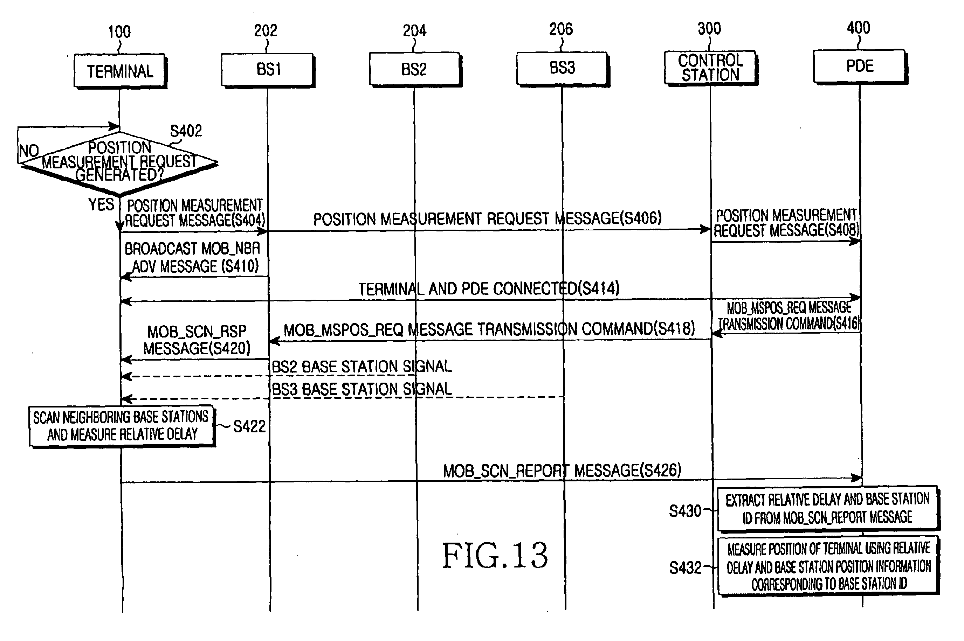

Although the terminal 100 transmits both the position measurement request and the neighboring base station scan result to the PDE 400 using a WiBro network shown in FIG. 4, the terminal 100 may transmit the position measurement request using the WiBro network and transmit the neighboring base station scan result directly to the PDE 400 using a TCP/IP network without having to be transmitted via the main base station 202 and the control station 300 as illustrated in FIG. 13.

FIG. 13 is a flowchart illustrating a position measuring method using relative delay information according to a sixth embodiment of the present invention.

In FIG. 13, after the position measurement request is generated in steps S402 through S408, the terminal 100 receives the MOB_NBR_ADV message in step S410 and transmits the MOB_SCN_REPORT message including the scan result directly to the PDE 400 in step S426. The remaining operations in FIG. 13 are the same as those in FIG. 4, and will not be further described herein.

According to another embodiment of the present invention, the terminal 100 may directly measure its position using the relative delay information for the neighboring base stations 204 and 206 and position information of the base stations 202, 204, and 206. In other words, the terminal 100 may calculate its position using its measurement value if it determines its position.

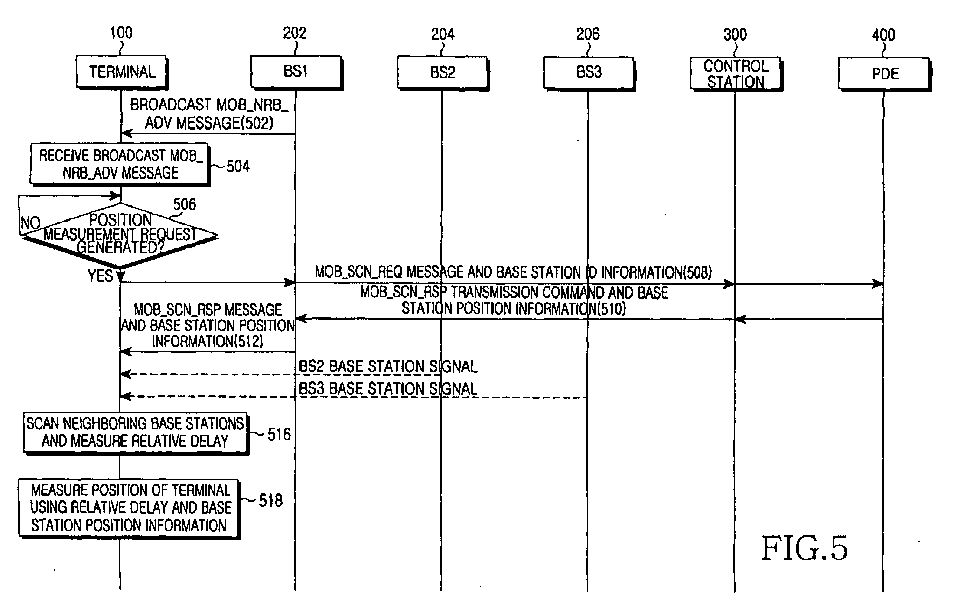

FIG. 5 is a flowchart illustrating a position measuring method using relative delay information according to a second embodiment of the present invention. Referring to FIG. 5, the main base station 202 broadcasts the MOB_NBR_ADV message including information about its neighboring base stations 204 and 206 in step 502. At this time, the MOB_NBR_ADV message may be used for a position measurement request generated by a need to measure the position of the terminal 100 or a need for the main base station 202 to secure a measurement value required for measuring the position of the terminal 100.

The terminal 100 receives the MOB_NBR_ADV message from the main base station 202 in step 504. The terminal 100 may acquire information about its neighboring base stations 204 and 206 (e.g., the IDs of the neighboring base stations 204 and 206) from the received MOB_NBR_ADV message.

After receipt of the MOB_NBR_ADV message, the terminal 100 determines whether a position measurement request is generated in step 506. The position measurement request may be generated by a need for the terminal 100 to check its position or a need for the main base station 202 to measure the position of the terminal 100.

If the position measurement request is generated, the terminal 100 transmits the MOB_SCN_REQ message for requesting neighboring base station scan information and base station ID information for requesting position information of the base stations 202, 204, and 206 to the PDE 400 through the main base station 202 and the control station 300 in step 508. At this time, the main base station 202 transmits the MOB_SCN_REQ message and base station ID information received from the terminal 100 to the control station 300. The control station 300 transmits the MOB_SCN_REQ message and the base station ID information received from the base station 202 to the PDE 400. Upon receipt of the MOB_SCN_REQ message and the base station ID information, the main base station 202, the control station 300, and the PDE 400 recognize that the neighboring base station scan information and position information of the base stations 202, 204, and 206 are requested from the terminal 100.

Upon receipt of the MOB_SCN_REQ message and the base station ID information, the PDE 400 transmits in step 510 the MOB_SCN_RSP transmission command and the position information of the base stations 202, 204, and 206 corresponding to the base station ID information to the main bas station 202 through the control station 300. At this time, the PDE 400 also transmits BS Almanac information including the time and position of each base station when transmitting the position information of each of the base stations 202, 204, and 206.

Upon receipt of the MOB_SCN_RSP transmission command and the position information of the base stations 202, 204, and 206, the main base station 202 transmits in step 512 the MOB_SCN_RSP message and the position information to the terminal 100. At this time, the MOB_SCN_RSP message is information for scanning the neighboring base stations 204 and 206 and includes time required for scanning the neighboring base stations 204 and 206, the number of scan operations, and a scan result reporting mode. The detailed structure of the MOB_SCN_RSP message has already been described with reference to FIG. 11.

The terminal 100 receives the MOB_SCN_RSP message and the position information of the base stations 202, 204, and 206 corresponding to the base station ID information, and scans in step 516 the neighboring base stations 204 and 206 according to the neighboring base station scan information included in the MOB_SCN_RSP message and measures relative delays for the neighboring base stations 204 and 206.

For example, the terminal 100 receives the BS2 base station signal and the BS3 base station signal according to the neighboring base station scan information, scans the neighboring base stations 204 and 206, and measures the relative delay information for the neighboring base stations 204 and 206 with respect to the main base station 202.

The terminal 100 measures its position using the relative delay information and the position information of the base stations 202, 204, and 206 corresponding to the base station ID information in step 518. In other words, the terminal 100 acquires a difference between a distance between the terminal 100 and the neighboring base station 204, and a distance between the terminal 100 and the neighboring base station 206, using the relative delay information, and measures its position using a trigonometric measurement method with the relative delay information and the position information of the base stations 202, 204, and 206.

In the previous embodiment of the present invention, the PDE 400 provides the position information of the base stations 202, 204, and 206 only to a specific terminal.

However, according to yet another embodiment of the present invention, the main base station 202 may broadcast its position information and position information of the neighboring base stations 204 and 206 to all terminals within a corresponding cell through cell broadcasting.

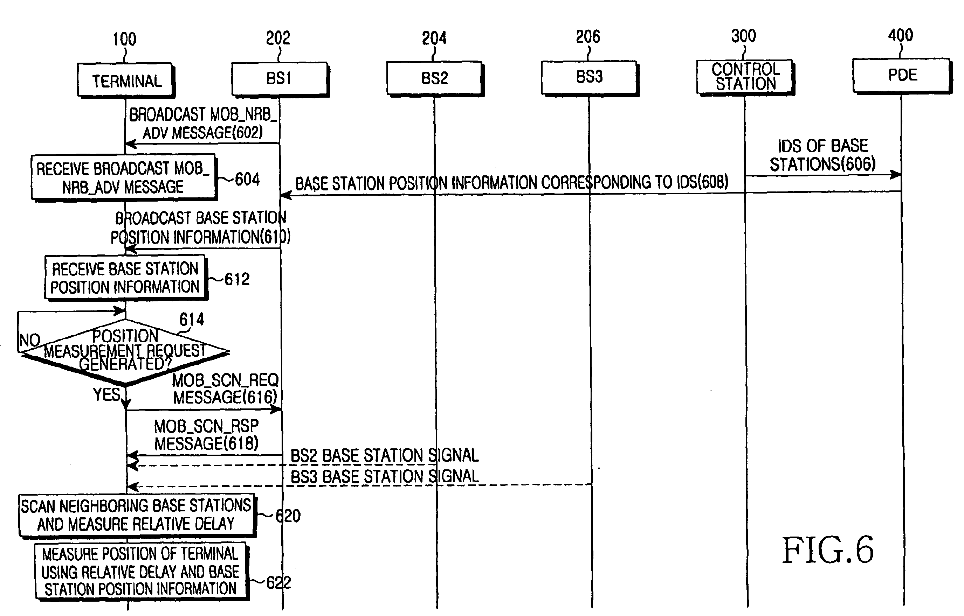

FIG. 6 is a flowchart illustrating a position measuring method using relative delay information according to a third embodiment of the present invention. Referring to FIG. 6, the main base station 202 broadcasts the MOB_NBR_ADV message including information about its neighboring base stations 204 and 206 in step 602.

The terminal 100 then receives the MOB_NBR_ADV message from the main base station 202 in step 604. The terminal 100 may acquire information about its neighboring base stations 204 and 206 (e.g., the IDs of the neighboring base stations 204 and 206) from the received MOB_NBR_ADV message.

The control station 300 knows the IDs of base stations 202, 204, and 206 and provides the IDs to the PDE 400 in step 606.

Upon receipt of the IDs from the control station 300, the PDE 400 transmits in step 608 position information of the base stations 202, 204, and 206 corresponding to the IDs to the main base station 202.

The main base station 202 receives the position information of the base stations 202, 204, and 206 corresponding to the IDs from the PDE 400 and broadcasts the received position information to a corresponding cell in step 610.

The terminal 100 receives the position information in step 612.

Upon receipt of the position information, the terminal 100 determines whether the position measurement request is generated in step 614. The position measurement request is generated by a need for the terminal 100 to check its position or a need for the main base station 202 to measure the position of the terminal 100.

If the position measurement request is generated, the terminal 100 transmits the MOB_SCN_REQ message for requesting neighboring base station scan information to the main base station 202 in step 616. The detailed structure of the MOB_SCN_REQ message is already described with reference to FIG. 10.

Upon receipt of the MOB_SCN_REQ message, the main base station 202 transmits the MOB_SCN_RSP message to the terminal 100 in step 618. At this time, the MOB_SCN_RSP message is information for scanning the neighboring base stations 204 and 206 and includes time required for scanning the neighboring base stations 204 and 206, the number of scan operations, and a scan result reporting mode. The detailed structure of the MOB_SCN_RSP message is already described with reference to FIG. 11.

Upon receipt of the MOB_SCN_RSP message from the main base station 202, the terminal 100 scans the neighboring base stations 204 and 206 according to the neighboring base station scan information included in the MOB_SCN_RSP message and measures relative delays for the neighboring base stations 204 and 206 in step 620. For example, the terminal 100 receives the BS2 base station signal and the BS3 base station signal according to the neighboring base station scan information, scans the neighboring base stations 204 and 206, and measures the relative delay information for the neighboring base stations 204 and 206 with respect to the main base station 202.

The terminal 100 in step 622 then measures its position using the relative delay information and the position information of the base stations 202, 204, and 206 corresponding to the base station ID information.

According to still another embodiment of the present invention, the position of the terminal 100 may be measured according to the position measurement request message transmitted to the terminal 100 and the main base station 202 by the PDE 400 when the PDE 400 needs to measure the position of the terminal 100.

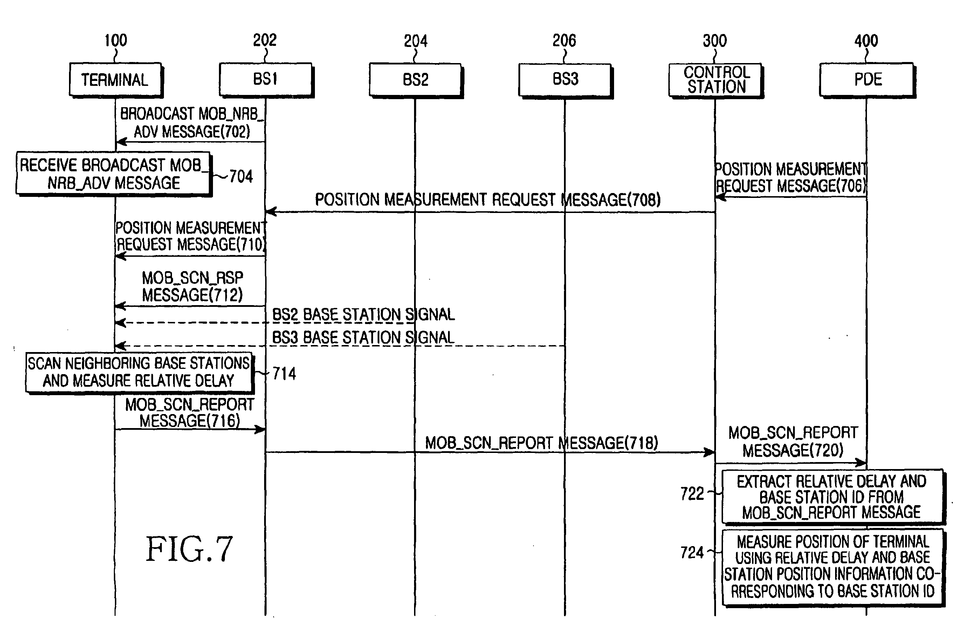

FIG. 7 is a flowchart illustrating a position measuring method using relative delay information according to a fourth embodiment of the present invention. In FIG. 7, the PDE 400 requests position measurement, and a position measurement request from the PDE 400 is transmitted to the terminal 100 via the control station 300 and the main base station 202 using a WiBro network and a neighboring base station scan result from the terminal 100 is transmitted to the PDE 400 via the control station 300 and the main base station 202 using the WiBro network.

First, position measurement for the terminal 100 begins with the transmission of a position measurement request message from the PDE 400. To this end, the PDE 400 transmits the position measurement request (MOB_MSPOS_REQ) message to the control station 300 in step 706 if a position measurement of the terminal 100 is needed. At this time, the MOB_MSPOS_REQ message includes information indicating that the position measurement request for the terminal 100 is generated and information for causing the main base station 202 to transmit the MOB_SCN_RSP message to the terminal 100.

The controls station 300 transmits the MOB_MSPOS_REQ message from the PDE 400 to the main base station 202 in step 708.

The main base station 202 transmits the received MOB_MSPOS_REQ message to the terminal 100 in step 710 and periodically broadcasts the MOB_NBR ADV message including information about its neighboring base stations 204 and 206 in step 711. Thus, the receipt of the MOB_NBR_ADV message is passively performed in view of the terminal 100 and may precede the transmission of the MOB_MSPOS_REQ message: At this time, the MOB_NBR_ADV message may be used when the position measurement request is generated by a need to measure the position of the terminal 100 or a need for the main base station 202 to secure a measurement value required for measuring the position of the terminal 100. The main base station 202 transmits the MOB_SCN_RSP message to the terminal 100 in step 712 after changing a specific field value of the MOB_SCN_RSP message to indicate that the MOB_SCN_RSP message is intended for position measurement, as described with reference to FIG. 11.

Upon receipt of the position measurement request message from the main base station 202, the terminal 100 can recognize that the position measurement request message for requesting measurement of its position is generated from the PDE 400 and scan its neighboring base stations 204 and 206 required for the measurement using the MOB_SCN_RSP message transmitted from the main base station 202.

Upon receipt of the position measurement request message, the MOB_NBR_ADV message, and the MOB_SCN_RSP message from the main base station 202, the terminal 100 scans in step 714 the neighboring base stations 204 and 206 according to information included in the MOB_NBR_ADV message and the MOB_SCN_RSP message and measures relative delay information for the neighboring base stations 204 and 206 according to the scan result in step 714. For example, the terminal 100 scans the neighboring base stations 204 and 206 by receiving the BS2 base station signal from the neighboring base station 204 and the BS3 base station signal from the neighboring base station 206 according to the information included in the MOB_SCN_RSP message and measures the relative delay information for the neighboring base stations 204 and 206 according to the scan result.

The terminal 100 encapsulates the neighboring base station scan result and the relative delay information in the MOB_SCN_REPORT message and transmits the MOB_SCN_REPORT message to the main base station 202 in step 716.

Upon receipt of the MOB_SCN_REPORT message from the terminal 100 in step 716, the main base station 202 transmits in step 718 the received MOB_SCN_REPORT message to the controls station 300.

The control station 300 receives the MOB_SCN_REPORT message from the main base station 202 and then transmits the received MOB_SCN_REPORT message to the PDE 400 in step 720.

The PDE 400 receives the MOB_SCN_REPORT message from the control station 300, extracts in step 722 the relative delay information and the base station ID information, and measures in step 724 the position of the terminal 100 using the relative delay information and the position information of the base stations 202, 204, and 206 corresponding to the base station ID information. For example, the PDE 400 acquires a difference between a distance between the terminal 100 and the neighboring base station 204, and a distance between the terminal 100 and the neighboring base station 206, using the relative delay information, and measures the position of the terminal 100 using a trigonometric measurement method with the relative delay information and the position information of the base stations 202, 204, and 206.

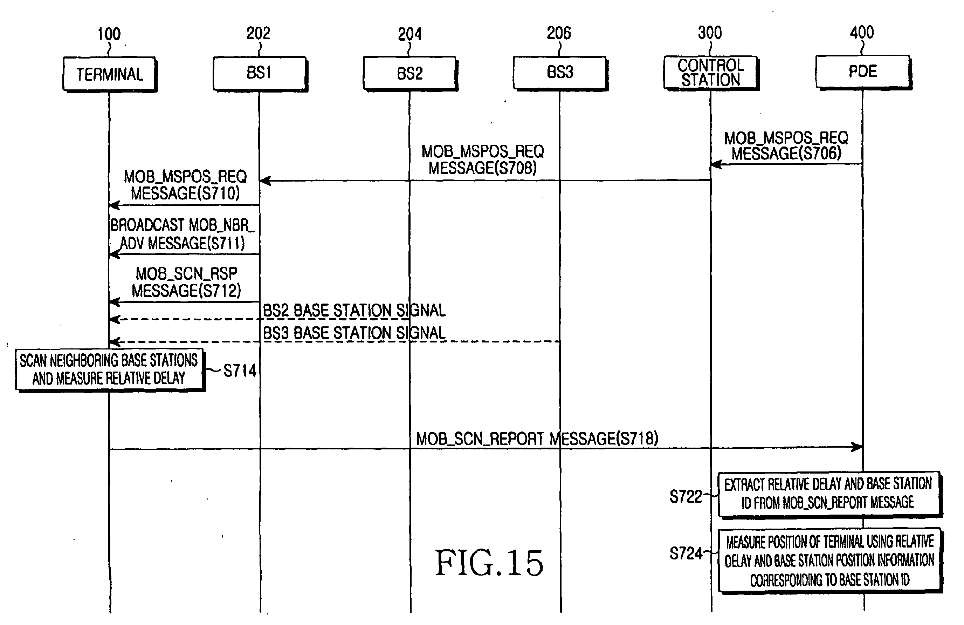

Unlike in FIG. 7, the PDE 400 may transmit the position measurement request to the terminal 100 using the WiBro network and the terminal 100 may transmit the neighboring base station scan result directly to the PDE 400 using a TCP/IP network as illustrated in FIG. 15. Referring to FIG. 15, the MOB_SCN_REPORT message including the neighboring base station scan result is directly to the PDE 400 from the terminal 100 in step S718. FIG. 15 is a flowchart illustrating a position measuring method using relative delay information according to an eighth embodiment of the present invention. Steps S706 through S714 of FIG. 15 are the same as steps 706 through 714 of FIG. 7 and steps 722 and 724 are similar to steps 722 and 724.

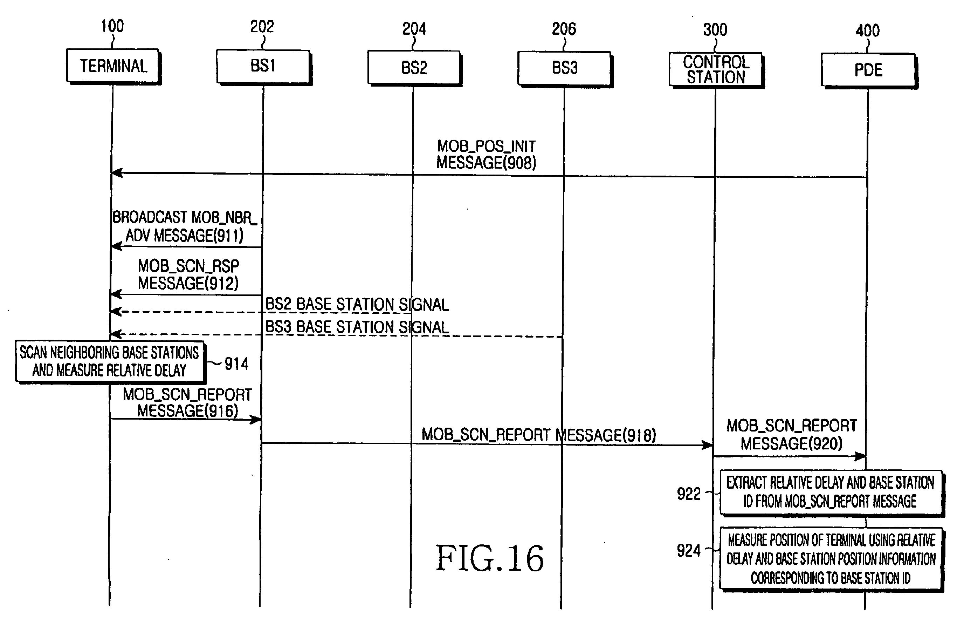

Unlike in FIG. 7, the PDE 400 may transmit the position measurement request to the terminal 100 using a TCP/IP network and the terminal 100 may transmit the neighboring base station scan result to the PDE 400 using a WiBro network via the main base station 202 and the control station 300, as illustrated in FIG. 16. Referring to FIG. 16, a position measurement request (MOB_POS_INIT) message is transmitted directly to the terminal 100 from the PDE 400 using a TCP/IP network in step S908. FIG. 16 is a flowchart illustrating a position measuring method using relative delay information according to a ninth embodiment of the present invention. Steps 911 through 924 of FIG. 16 are the same as steps 711 through 724 of FIG. 7, respectively, and will not be further described herein.

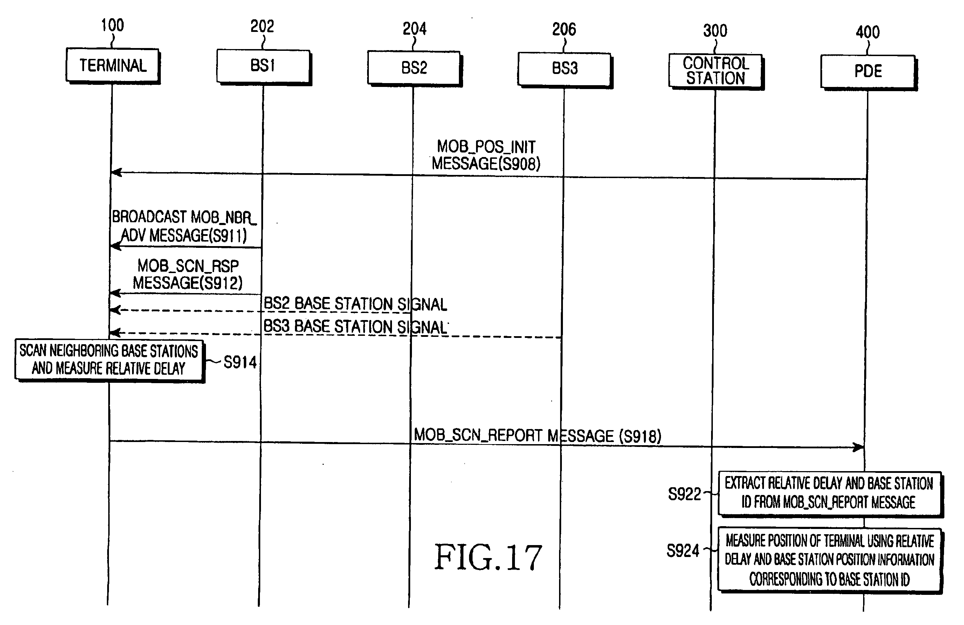

The PDE 400 may transmit the position measurement request to the terminal 100 using a TCP/IP network and the terminal 100 may transmit the neighboring base station scan result to the PDE 400 using the TCP/IP network, as illustrated in FIG. 17. FIG. 17 is a flowchart illustrating a position measuring method using relative delay information according to a tenth embodiment of the present invention. Steps S908 through S914 of FIG. 17 are the same as steps 908 through 914 of FIG. 16 and steps S918 through S924 of FIG. 17 are the same as steps S718 through S724 of FIG. 15, respectively.

According to still another embodiment of the present invention, the terminal 100 may transmit the position measurement request message to the PDE 400 using Internet Protocol (IP).

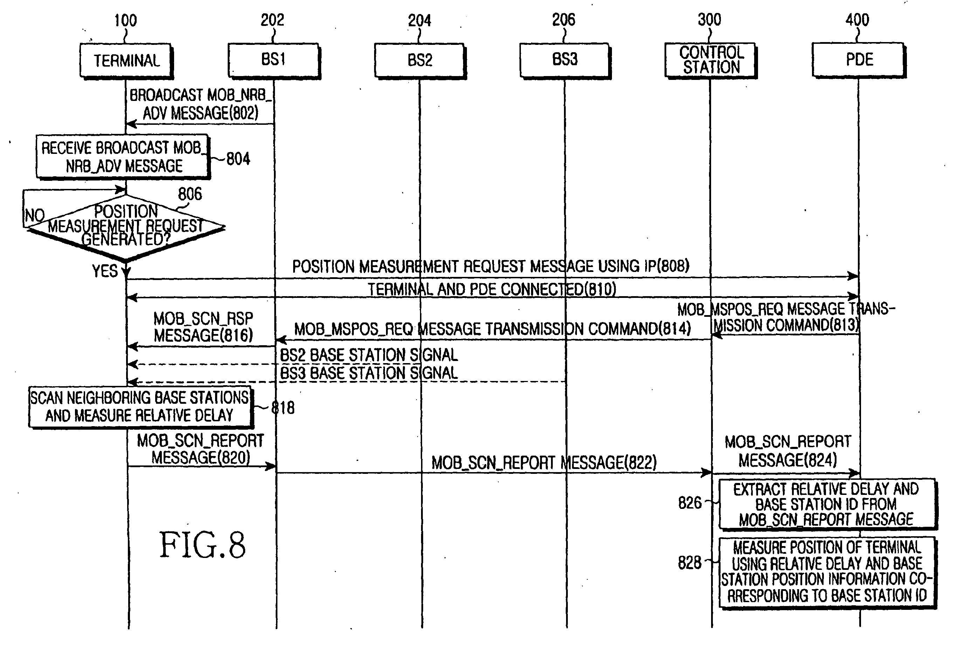

FIG. 8 is a flowchart illustrating a position measuring method using relative delay information according to a fifth embodiment of the present invention. In FIG. 8, the terminal 100 request position measurement, and the position measurement request from the terminal 100 is transmitted directly to the PDE 400 using a TCP/IP network and the neighboring base station scan result is transmitted from the terminal 100 to the PDE 400 via the main base station 202 and the control station 300 using a WiBro network.

Referring to FIG. 8, the MOB_NBR_ADV message is periodically broadcast by the main base station 202 in step 802. After receipt of the MOB_NBR_ADV message in step 804 and determining in step 806 of the position measurement request has been generated, the terminal 100 transmits the position measurement request message to the PDE 400 using IP in step 808 if it determines that it is necessary to measure its position. Steps 810 through 828 are then performed to measure the position of the terminal 100. Since steps 810 through 828 of FIG. 8 are the same as steps 414 through 432 of FIG. 4, they will not be further described herein.

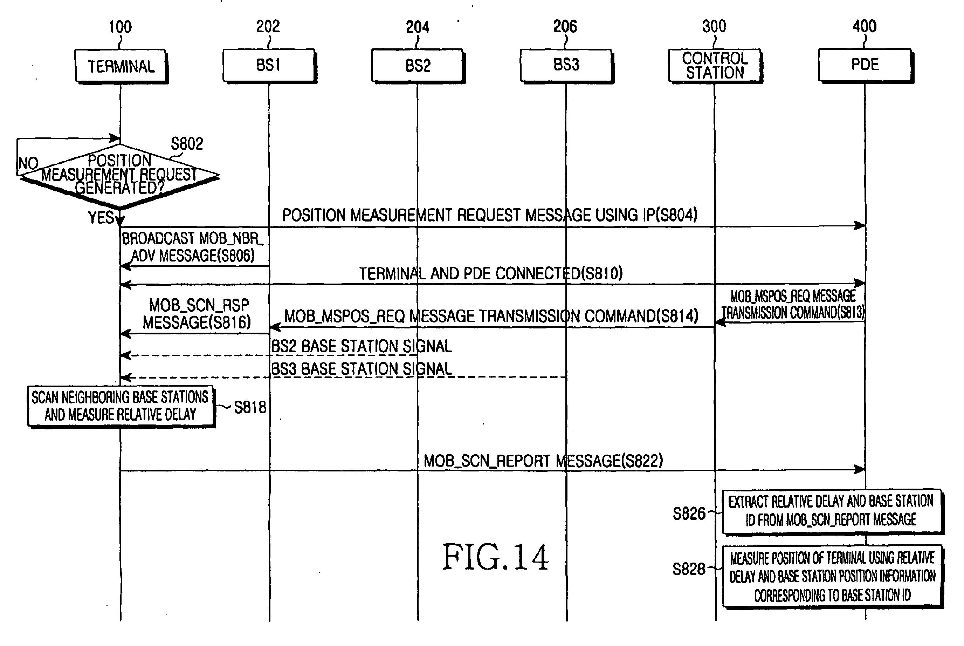

FIG. 14 is a flowchart illustrating a position measuring method using relative delay information according to a seventh embodiment of the present invention. In FIG. 14, the terminal 100 requests position measurement, and both the position measurement request and the neighboring base station result from the terminal 100 are transmitted directly to the PDE 400 using a TCP/IP network. Thus, referring to FIG. 14, if the position measurement request is generated in step S802, a position measurement request (MOB_POS_START) message is transmitted to the PDE 400 in step S804. The MOB_NBR_ADV message is received in step S806 and the MOB_SCN_REPORT message is transmitted from the terminal 100 directly to the PDE 400 in step S822. The remaining operations in FIG. 14 are the same as those in FIG. 8 and will not be further described herein.

As described above, according to the present invention, by using relative delay information of a conventional WiBro system, position measurement can be easily performed.

Moreover, since the position of a terminal is measured using a parameter used for a hand-over, additional data measurement is not required for the position measurement.

Furthermore, efficiency in the use of a parameter of a WiBro system can be improved by using a parameter previously used only in a hand-over for position measurement.

While the present invention has been shown and described with reference to preferred embodiments thereof, it will be understood that the invention is defined by the appended claims.

## Claims

1. A position measuring system using a wireless broadband signal, comprising:
a terminal (100) for transmitting a position measurement request message in response to a position measurement request, scanning neighboring base stations (203; 204, 206), and transmitting a neighboring base station scan result;
a main base station (201; 202) for broadcasting information about the neighboring base stations and transmitting a message to the terminal after incorporating in the message information required for scanning the neighboring base stations in response to the position measurement request message; and
a position determination entity (400) for receiving the position measurement request message from the terminal and, upon receipt of a neighboring base station scan result, measuring the position of the terminal using the neighboring base station scan result; wherein
the position determination entity measures the position of the terminal using relative delay information (10) between the main base station and the neighboring base stations, which is included in the neighboring base station scan result, and base station position information; and
the relative delay information indicates a difference between the time required for a downlink signal of the main base station to arrive in the terminal and the time required for a downlink signal from the neighboring base station to arrive in the terminal.

2. The position measuring system of claim 1, wherein the terminal (100) transmits the position measurement request message and the neighboring base station scan result to the position determination entity (400) using one of the IP address of the position determination entity and a wireless broadband network.

3. The position measuring system of claim 2, wherein all messages from the terminal (100) are transmitted directly to the position determination entity (400) when the IP address of the position determination entity is used for the transmission.

4. The position measuring system of claim 1, wherein the position measurement request message is a MOB_SCN_REQ message in which a code value of a specific field is changed to indicate that the MOB_NBR_REQ message is intended for position measurement.

5. The position measuring system of claim 2, wherein
the main base station (201; 202) broadcasts a MOB_NBR_ADV message that includes the information about the neighboring base stations and transmits a MOB_SCN_RSP message to the terminal after incorporating in the MOB_SCN_RSP message the information that is required for scanning the neighboring base stations; and
the position measuring system further comprises a control station (300) for transmitting and receiving messages between the base station and the position determination entity.

6. The position measuring system of claim 5, wherein all messages from the terminal (100) are transmitted to the position determination entity (400) via the main base station (201; 202) and the control station (300) when the wireless broadband network is used for the transmission.

7. The position measuring system of claim 5, wherein the terminal (100) scans the neighboring base stations (203; 204, 206) using information included in the MOB_NBR_ADV message and the MOB_SCN_RSP message.

8. The position measuring system of claim 5, wherein the main base station (201; 202) transmits the MOB_SCN_RSP message after changing a code value of a specific field of the MOB_SCN_RSP message to indicate that the MOB_SCN_RSP message is intended for position measurement.

9. A position measuring system using a wireless broadband signal, comprising:
a position determination entity (400) for transmitting a position measurement request message in response to a position measurement request;
a terminal (100) for scanning neighboring base stations (203; 204, 206) upon receipt of the position measurement request message and transmitting a neighboring base station scan result; and
a main base station (202) for broadcasting information about the neighboring base stations and transmitting a message to the terminal after incorporating in the message information required for scanning the neighboring base stations in response to the position measurement request message;
wherein upon receipt of the neighboring base station scan result from the terminal, the position determination entity measures the position of the terminal using the neighboring base station scan result, wherein
the position determination entity measures the position of the terminal using relative delay information (10) between the main base station and the neighboring base stations, which is included in the neighboring base station scan result, and base station position information; and
the relative delay information indicates a difference between the time required for a downlink signal of the main base station to arrive in the terminal and the time required for a downlink signal from the neighboring base station to arrive in the terminal.

10. The position measuring system of claim 9, wherein the position determination entity (400) transmits the position measurement request message to the terminal (100) using one of the IP address of the terminal and a wireless broadband network.

11. The position measuring system of claim 10, wherein the position determination entity (400) transmits the position measurement request message directly to the terminal (100) when the IP address of the terminal is used for the transmission.

12. The position measuring system of claim 10, wherein
the main base station (202) is for broadcasting a MOB_NBR_ADV message including the information about the neighboring base stations (203; 204, 205) and transmitting a MOB_SCN_RSP message to the terminal (100) after incorporating in the MOB_SCN_RSP message the information that is required for scanning the neighboring base stations in response to the position measurement request message; and
the position measuring system further comprising a control station (300) for transmitting and receiving messages between the base station and the position determination entity.

13. The position measuring system of claim 12, wherein the neighboring base station scan result from the terminal (100) is transmitted to the position determination entity (400) via the main base station (202) and the control station (300) when the wireless broadband network is used for the transmission.

14. The position measuring system of claim 9, wherein the neighboring base station scan result from the terminal (100) is transmitted directly to the position determination entity (400) when the IP address of the terminal is used for the transmission.

15. The position measuring system of claim 12, wherein the position determination entity transmits the position measurement request message to the terminal via the base station and the control station when using the wireless broadband network.

16. The position measuring system of claim 12, wherein the main base station (202) transmits the MOB_SCN_RSP message after changing a code value of a specific field of the MOB_SCN_RSP message to indicate that the MOB_SCN_RSP message is intended for position measurement.

17. A position measuring method using a wireless broadband signal, comprising the steps of:
receiving, by a terminal (100), information about neighboring base stations (203; 204, 206) broadcasted from a main base station (201; 202) and receiving, by the terminal, a response message from said main station (201; 202) including information required for scanning the neighboring base stations in response to the position measurement request message;
scanning, by a terminal (100), neighboring base stations in response to a position measurement request and transmitting, by the terminal, a neighboring base station scan result; and
receiving, by a position determination entity (400), the position measurement request message from the terminal and, measuring, by the position determination entity, the position of the terminal using the received neighboring base station scan result; wherein
the position determination entity measures the position of the terminal using relative delay information (10) between the main base station and the neighboring base stations, which is included in the neighboring base station scan result, and base station position information; and
the relative delay information indicates a difference between the time required for a downlink signal of the main base station to arrive in the terminal and the time required for a downlink signal from the neighboring base station to arrive in the terminal.

18. The position measuring method of claim 17, further comprising:
transmitting, by the terminal (100), a position measurement request message to the position determination entity (400) in response to the position measurement request.

19. The position measuring method of claim 18, wherein the neighboring base stations (203; 204, 206) are scanned using the broadcasted information and the response message.

20. The position measuring method of claim 18, further comprising the step of receiving, by a control base station (300), the neighboring base station scan result, and providing, by the control base station, the received neighboring base station scan result to the position determination entity (400).

21. The position measuring method of claim 20, wherein all messages from the terminal (100) are transmitted directly to the position determination entity (400) when an IP address of the position determination entity is used for the transmission.

22. The position measuring method of claim 20, wherein all messages from the terminal (400) are transmitted to the position determination entity (400) via the main base station (201; 202) and the control station (300) when a wireless broadband network is used for the transmission.

23. The position measuring method of claim 18, wherein the response message is transmitted after a code value of its specific field is changed to indicate that it is intended for position measurement.

## Patentansprüche

1. Positionsmesssystem, das ein Drahtlos-Breitbandsignal verwendet, wobei es umfasst:
ein Endgerät (100), mit dem in Reaktion auf eine Positionsmessungs-Anforderung eine Positionsmessungs-Anforderungsnachricht gesendet wird, benachbarte Basisstationen (203; 204, 206) abgetastet werden und ein Ergebnis der Abtastung benachbarter Basisstationen gesendet wird;
eine Haupt-Basisstation (201; 202), mit der Informationen über die benachbarten Basisstationen rundgesendet werden und eine Nachricht zu dem Endgerät gesendet wird, nachdem in die Nachricht Informationen integriert worden sind, die erforderlich sind, um die benachbarten Basisstationen in Reaktion auf die Positionsmessungs-Anforderungsnachricht abzutasten; und
eine Positionsbestimmungseinheit (400), mit der die Positionsmessungs-Anforderungsnachricht von dem Endgerät empfangen wird und nach Empfang eines Ergebnisses der Abtastung benachbarter Basisstationen die Position des Endgerätes unter Verwendung des Ergebnisses der Abtastung benachbarter Basisstationen gemessen wird; wobei
die Positionsbestimmungseinheit die Position des Endgerätes unter Verwendung von Informationen (10) über relative Verzögerung zwischen der Haupt-Basisstation und den benachbarten Basisstationen, die in dem Ergebnis der Abtastung der benachbarten Basisstationen enthalten sind, sowie von Basisstations-Positionsinformationen misst; und
die Informationen über relative Verzögerung eine Differenz zwischen der Zeit, die ein Downlink-Signal der Haupt-Basisstation benötigt, um in dem Endgerät einzutreffen, und der Zeit anzeigen, die ein Downlink-Signal von der benachbarten Basisstation benötigt, um in dem Endgerät einzutreffen.

2. Positionsmesssystem nach Anspruch 1, wobei das Endgerät (100) die Positionsmessungs-Anforderungsnachricht und das Ergebnis der Abtastung benachbarter Basisstationen unter Verwendung der IP-Adresse der Positionsbestimmungseinheit oder eines Drahtlos-Breitbandnetzwerks zu der Positionsbestimmungseinheit (400) sendet.

3. Positionsmesssystem nach Anspruch 2, wobei alle Nachrichten von dem Endgerät (100) direkt zu der Positionsbestimmungseinheit (400) gesendet werden, wenn die IP-Adresse der Positionsbestimmungseinheit für das Senden verwendet wird.

4. Positionsmesssystem nach Anspruch 1, wobei die Positionsmessungs-Anforderungsnachricht eine MOB_SCN_REQ-Nachricht ist, in der ein Codewert eines spezifischen Feldes geändert ist, um anzuzeigen, dass die MOB_NBR_REQ-Nachricht für Positionsmessung vorgesehen ist.

5. Positionsmesssystem nach Anspruch 2, wobei
die Haupt-Basisstation (201; 202) eine MOB_NBE_ADV-Nachricht rundsendet, die die Informationen über die benachbarten Basisstationen enthält, und eine MOB_SCN_RSP-Nachricht zu dem Endgerät sendet, nachdem in die MOB_SCN_RSP-Nachricht die Informationen integriert worden sind, die erforderlich sind, um die benachbarten Basisstationen abzutasten; und
das Positionsmesssystem des Weiteren eine Steuerstation (300) zum Senden und Empfangen von Nachrichten zwischen der Basisstation und der Positionsbestimmungseinheit umfasst.

6. Positionsmesssystem nach Anspruch 5, wobei alle Nachrichten von dem Endgerät (100) über die Haupt-Basisstation (201; 202) und die Steuerstation (300) zu der Positionsbestimmungseinheit (400) gesendet werden, wenn das Drahtlos-Breitbandnetzwerk für das Senden verwendet wird.

7. Positionsmesssystem nach Anspruch 5, wobei das Endgerät (100) die benachbarten Basisstationen (203; 204, 206) unter Verwendung von Informationen abtastet, die in der MOB_NBR_ADV-Nachricht und der MOB_SCN_RSP-Nachricht enthalten sind.

8. Positionsmesssystem nach Anspruch 5, wobei die Haupt-Basisstation (201; 202) die MOB_SCN_RSP-Nachricht sendet, nachdem ein Codewert eines spezifischen Feldes der MOB_SCN_RSP-Nachricht geändert worden ist, um anzuzeigen, dass die MOB_SCN_RSP-Nachricht für Positionsmessung vorgesehen ist.

9. Positionsmesssystem, das ein Drahtlos-Breitbandsignal verwendet, wobei es umfasst:
eine Positionsbestimmungseinheit (400), mit der eine Positionsmessungs-Anforderungsnachricht in Reaktion auf eine Positionsmessungs-Anforderung gesendet wird;
ein Endgerät (100), mit dem nach Empfang der Positionsmessungs-Anforderungsnachricht benachbarte Basisstationen (203; 204; 206) abgetastet werden und ein Ergebnis der Abtastung benachbarter Basisstationen gesendet wird; und
eine Haupt-Basisstation (202), mit der Informationen über die benachbarten Basisstationen rundgesendet werden und eine Nachricht zu dem Endgerät gesendet wird, nachdem in die Nachricht Informationen integriert worden sind, die erforderlich sind, um die benachbarten Basisstationen in Reaktion auf die Positionsmessungs-Anforderungsnachricht abzutasten;
wobei nach Empfang des Ergebnisses der Abtastung benachbarter Basisstationen von dem Endgerät die Positionsbestimmungseinheit die Position des Endgerätes unter Verwendung des Ergebnisses der Abtastung benachbarter Basisstationen misst, wobei
die Positionsbestimmungseinheit die Position des Endgerätes unter Verwendung von Informationen (10) über relative Verzögerung zwischen der Haupt-Basisstation und den benachbarten Basisstationen, die in dem Ergebnis des Abtastens der benachbarten Basisstationen enthalten sind, sowie von Basisstations-Positionsinformationen misst; und
die Informationen über relative Verzögerung eine Differenz zwischen der Zeit, die ein Downlink-Signal der Haupt-Basisstation benötigt, um in dem Endgerät einzutreffen, und der Zeit anzeigen, die ein Downlink-Signal von der benachbarten Basisstation benötigt, um in dem Endgerät einzutreffen.

10. Positionsmesssystem nach Anspruch 9, wobei die Positionsbestimmungseinheit (400) die Positionsmessungs-Anforderungsnachricht unter Verwendung der IP-Adresse des Endgerätes oder eines Drahtlos-Breitbandnetzwerks zu dem Endgerät (100) sendet.

11. Positionsmesssystem nach Anspruch 10, wobei die Positionsbestimmungseinheit (400) die Positionsmessungs-Anforderungsnachricht direkt zu dem Endgerät (100) sendet, wenn die IP-Adresse des Endgerätes für das Senden verwendet wird.

12. Positionsmesssystem nach Anspruch 10, wobei
die Haupt-Basisstation (202) dazu dient, eine MOB_NBR_ADV-Nachricht rundzusenden, die die Informationen über die benachbarten Basisstationen (203; 204, 205) enthält, und eine MOB_SCN_RSP-Nachricht zu dem Endgerät (100) zu senden, nachdem in die MOB_SCN_RSP-Nachricht die Informationen integriert worden sind, die erforderlich sind, um die benachbarten Basisstationen in Reaktion auf die Positionsmess-Anforderungsnachricht abzutasten; und
das Positionsmesssystem des Weiteren eine Steuerstation (300) zum Senden und Empfangen von Nachrichten zwischen der Basisstation und der Positionsbestimmungseinheit umfasst.

13. Positionsmesssystem nach Anspruch 12, wobei das Ergebnis der Abtastung der benachbarten Basisstation von dem Endgerät (100) über die Basisstation (202) und die Steuerstation (300) zu der Positionsbestimmungseinheit (400) gesendet wird, wenn das Drahtlos-Breitbandnetzwerk für das Senden verwendet wird.

14. Positionsmesssystem nach Anspruch 9, wobei das Ergebnis der Abtastung der benachbarten Basisstationen von dem Endgerät (100) direkt zu der Positionsbestimmungseinheit (400) gesendet wird, wenn die IP-Adresse des Endgerätes für das Senden verwendet wird.

15. Positionsmesssystem nach Anspruch 12, wobei die Positionsbestimmungseinheit die Positionsmessungs-Anforderungsnachricht über die Basisstation und die Steuerstation zu dem Endgerät sendet, wenn das Drahtlos-Breitbandnetzwerk verwendet wird.

16. Positionsmesssystem nach Anspruch 12, wobei die Haupt-Basisstation (202) die MOB_SCN_RSP-Nachricht sendet, nachdem ein Codewert eines spezifischen Feldes der MOB_SCN_RSP-Nachricht geändert worden ist, um anzuzeigen, dass die MOB_SCN_RSP-Nachricht für Positionsmessung vorgesehen ist.

17. Positionsmessverfahren unter Verwendung eines Drahtlos-Breitbandsignals, das die folgenden Schritte umfasst:
Empfangen von Informationen über benachbarte Basisstationen (203; 204, 206), die von einer Haupt-Basisstation (201; 202) rundgesendet werden, durch ein Endgerät (100) und Empfangen einer Antwortnachricht, die Informationen enthält, die zum Abtasten der benachbarten Basisstationen in Reaktion auf die Positionsmessungs-Anforderungsnachricht erforderlich sind, von der Hauptstation (201; 202) durch das Endgerät;
Abtasten benachbarter Basisstationen in Reaktion auf eine Positionsmess-Anforderung durch ein Endgerät (100) und Senden eines Ergebnisses der Abtastung benachbarter Basisstationen durch das Endgerät; und
Empfangen der Positionsmessungs-Anforderungsnachricht von dem Endgerät durch eine Positionsbestimmungseinheit (400) und Messen der Position des Endgerätes unter Verwendung des empfangenen Ergebnisses der Abtastung benachbarter Basisstationen durch die Positionsbestimmungseinheit; wobei
die Positionsbestimmungseinheit die Position des Endgerätes unter Verwendung von Informationen (10) relativer Verzögerung zwischen der Basisstation und den benachbarten Basisstationen, die in dem Ergebnis des Abtastens der benachbarten Basisstationen enthalten sind, sowie von Basisstations-Positionsinformationen misst; und
die Informationen über relative Verzögerung eine Differenz zwischen der Zeit, die ein Downlink-Signal der Haupt-Basisstation benötigt, um in dem Endgerät einzutreffen, und der Zeit anzeigt, die ein Downlink-Signal von der benachbarten Basisstation benötigt, um in dem Endgerät einzutreffen.

18. Positionsmessverfahren nach Anspruch 17, das des Weiteren umfasst:
Senden einer Positionsmessungs-Anforderungsnachricht zu der Positionsbestimmungseinheit (400) durch das Endgerät (100) in Reaktion auf die Positionsmessungs-Anforderung.

19. Positionsmessverfahren nach Anspruch 18, wobei die benachbarten Basisstationen (203; 204; 206) unter Verwendung der rundgesendeten Informationen und der Antwortnachricht abgetastet werden.

20. Positionsmessverfahren nach Anspruch 18, das des Weiteren den Schritt des Empfangens des Ergebnisses der Abtastung benachbarter Basisstationen durch eine Steuer-Basisstation (300) und des Bereitstellens des empfangenen Ergebnisses der Abtastung benachbarter Basisstationen durch die Steuer-Basisstation für die Positionsbestimmungseinheit (400) umfasst.

21. Positionsmessverfahren nach Anspruch 20, wobei alle Nachrichten von dem Endgerät (100) direkt zu der Positionsbestimmungseinheit (400) gesendet werden, wenn eine IP-Adresse der Positionsbestimmungseinheit für das Senden verwendet wird.

22. Positionsmessverfahren nach Anspruch 20, wobei alle Nachrichten von dem Endgerät (400) über die Haupt-Basisstation (201; 202) und die Steuerstation (300) zu der Positionsbestimmungseinheit (400) gesendet werden, wenn ein Drahtlos-Breitbandnetzwerk für das Senden verwendet wird.

23. Positionsmessverfahren nach Anspruch 18, wobei die Antwortnachricht gesendet wird, nachdem ein Codewert ihres spezifischen Feldes geändert worden ist, um anzuzeigen, dass sie für Positionsmessung vorgesehen ist.

## Revendications

1. Système de mesure de position utilisant un signal à large bande, sans fil, comportant :
un terminal (100) destiné à émettre un message de demande de mesure de position en réponse à une demande de mesure de position, à balayer des stations de base voisines (203 ; 204, 206) et à émettre un résultat du balayage des stations de base voisines ;
une station de base principale (201 ; 202) destinée à diffuser une information concernant les stations de base voisines et à transmettre un message au terminal après l'incorporation dans le message d'une information demandée pour le balayage des stations de base voisines en réponse au message de demande de mesure de position ; et
une entité (400) de détermination de position destinée à recevoir le message de demande de mesure de position en provenance du terminal et, à la suite de la réception d'un résultat du balayage des stations de base voisines, à mesurer la position du terminal en utilisant le résultat du balayage des stations de base voisines ; dans lequel
l'entité de détermination de position mesure la position du terminal en utilisant une information de retard relatif (10) entre la station de base principale et les stations de base voisines, qui est incluse dans le résultat du balayage des stations de base voisines, et une information de position de la station de base ; et
l'information de retard relatif indique une différence entre le temps demandé pour qu'un signal de liaison descendante de la station de base principale arrive dans le terminal et le temps demandé pour qu'un signal de liaison descendante provenant de la station de base voisine arrive au terminal.

2. Système de mesure de position selon la revendication 1, dans lequel le terminal (100) transmet le message de demande de mesure de position et le résultat du balayage des stations de base voisines à l'entité (400) de détermination de position en utilisant l'un de l'adresse IP de l'entité de détermination de position et d'un réseau de diffusion sans fil.

3. Système de mesure de position selon la revendication 2, dans lequel tous les messages provenant du terminal (100) sont transmis directement à l'entité (400) de détermination de position lorsque l'adresse IP de l'entité de détermination de position est utilisée pour la transmission.

4. Système de mesure de position selon la revendication 1, dans lequel le message de demande de mesure de position est un message MOB_SCN_REQ dans lequel une valeur de code d'un champ spécifique est modifiée pour indiquer que le message MOB_NBR_REQ est destiné à une mesure de position.

5. Système de mesure de position selon la revendication 2, dans lequel
la station de base principale (201 ; 202) diffuse un message MOB_NBR_ADV qui comprend l'information concernant les stations de base voisines et transmet un message MOB_SCN_RSP au terminal après l'incorporation dans le message MOB_SCN_RSP de l'information qui est demandée pour le balayage des stations de base voisines ; et
le système de mesure de position comprend en outre une station de commande (300) destinée à émettre et recevoir des messages entre la station de base et l'entité de détermination de position.

6. Système de mesure de position selon la revendication 5, dans lequel tous les messages provenant du terminal (100) sont transmis à l'entité (400) de détermination de position en passant par la station de base principale (201 ; 202) et la station de commande (300) lorsque le réseau à large bande sans fil est utilisé pour la transmission.

7. Système de mesure de position selon la revendication 5, dans lequel le terminal (100) balaie les stations de base voisines (203 ; 204, 206) en utilisant une information incluse dans le message MOB_NBR_ADV et dans le message MOB_SCN_RSP.

8. Système de mesure de position selon la revendication 5, dans lequel la station de base principale (201 ; 202) transmet le message MOB_SCN_RSP après avoir modifié une valeur de code d'un champ spécifique du message MOB_SCN_RSP pour indiquer que le message MOB_SCN_RSP est destiné à une mesure de position.

9. Système de mesure de position utilisant un signal à large bande, sans fil, comportant :
une entité (400) de détermination de position destinée à émettre un message de demande de mesure de position en réponse à une demande de mesure de position ;
un terminal (100) destiné à balayer des stations de base voisines (203 ; 204, 206) à la suite de la réception du message de demande de mesure de position et à émettre un résultat du balayage des stations de base voisines ; et
une station de base principale (202) destinée à diffuser une information concernant les stations de base voisines et à transmettre un message au terminal après l'incorporation dans le message d'une information demandée pour balayer les stations de base voisines en réponse au message de demande de mesure de position ;
dans lequel, à la suite de la réception du résultat du balayage des stations de base voisines en provenance du terminal, l'entité de détermination de position mesure la position du terminal en utilisant le résultat du balayage des stations de base voisines, dans lequel
l'entité de détermination de position mesure la position du terminal en utilisant une information de retard relatif (10) entre la station de base principale et les stations de base voisines, qui est incluse dans le résultat du balayage des stations de base voisines, et une information de position de la station de base ; et
l'information de retard relatif indique une différence entre le temps demandé pour qu'un signal de liaison descendante de la station de base principale arrive dans le terminal et le temps demandé pour qu'un signal de liaison descendante provenant de la station de base voisine arrive dans le terminal.

10. Système de mesure de position selon la revendication 9, dans lequel l'entité (400) de détermination de position transmet le message de demande de mesure de position au terminal (100) en utilisant l'un de l'adresse IP du terminal et d'un réseau à large bande sans fil.

11. Système de mesure de position selon la revendication 10, dans lequel l'entité (400) de détermination de position transmet le message de demande de mesure de position directement au terminal (100) lorsque l'adresse IP du terminal est utilisée pour la transmission.

12. Système de mesure de position selon la revendication 10, dans lequel
la station de base principale est destinée à diffuser un message MOB_NBR_ADV comprenant l'information concernant les stations de base voisines (203 ; 204, 205) et à transmettre un message MOB_SCN_RSP au terminal (100) après l'incorporation dans le message MOB_SCN_RSP de l'information qui est demandée pour balayer les stations de base voisines en réponse au message de demande de mesure de position ; et
le système de mesure de position comporte en outre une station de commande (300) destinée à émettre et recevoir des messages entre la station de base et l'entité de détermination de position.

13. Système de mesure de position selon la revendication 12, dans lequel le résultat du balayage des stations de base voisines provenant du terminal (100) est transmis à l'entité (400) de détermination de position en passant par la station de base principale (202) et la station de commande (300) lorsque le réseau à large bande sans fil est utilisé pour la transmission.

14. Système de mesure de position selon la revendication 9, dans lequel le résultat du balayage des stations de base voisines provenant du terminal (100) est transmis directement à l'entité (400) de détermination de position lorsque l'adresse IP du terminal est utilisée pour la transmission.

15. Système de mesure de position selon la revendication 12, dans lequel l'unité de détermination de position transmet le message de demande de mesure de position au terminal en passant par la station de base et la station de commande lors de l'utilisation du réseau à large bande sans fil.

16. Système de mesure de position selon la revendication 12, dans lequel la station de base principale (202) transmet le message MOB_SCN_RSP après une modification d'une valeur de code d'un champ spécifique du message MOB_SCN_RSP pour indiquer que le message MOB_SCN_RSP est destiné à une mesure de position.

17. Procédé de mesure de position utilisant un signal à large bande sans fil, comprenant les étapes qui consistent :
à recevoir, par un terminal (100), une information concernant des stations de base voisines (203 ; 204, 206) diffusée depuis une station de base principale (201 ; 202) et à recevoir, par le terminal, un message de réponse provenant de ladite station principale (201 ; 202), comprenant une information demandée pour balayer les stations de base voisines en réponse au message de demande de mesure de position ;
à balayer, par un terminal (100), des stations de base voisines en réponse à une demande de mesure de position et à émettre, par le terminal, un résultat du balayage des stations de base voisines ; et
à recevoir, par une entité (400) de détermination de position, le message de demande de mesure de position provenant du terminal et à mesurer, par l'entité de détermination de position, la position du terminal en utilisant le résultat du balayage des stations de base voisines, reçu ; dans lequel
l'entité de détermination de position mesure la position du terminal en utilisant une information de retard relatif (10) entre la station de base principale et les stations de base voisines, qui est incluse dans le résultat du balayage des stations de base voisines, et une information de position de la station de base ; et
l'information de retard relatif indique une différence entre le temps demandé pour qu'un signal de liaison descendante de la station de base principale arrive dans le terminal et le temps demandé pour qu'un signal de liaison descendante provenant de la station de base voisine arrive au terminal.

18. Procédé de mesure de position selon la revendication 17, comprenant en outre :
la transmission, par le terminal (100), d'un message de demande de mesure de position à l'entité (400) de détermination de position en réponse à la demande de mesure de position.

19. Procédé de mesure de position selon la revendication 18, dans lequel les stations de base voisines (203 ; 204, 206) sont balayées en utilisant l'information diffusée et le message de réponse.

20. Procédé de mesure de position selon la revendication 18, comprenant en outre l'étape de réception, par une station de base de commande (300), du résultat du balayage des stations de base voisines, et de fourniture, par la station de base de commande, du résultat du balayage des stations de base voisines, reçu, à l'entité (400) de détermination de position.

21. Procédé de mesure de position selon la revendication 20, dans lequel tous les messages provenant du terminal (100) sont transmis directement à l'entité (400) de détermination de position lorsqu'une adresse IP de l'entité de détermination de position est utilisée pour la transmission.

22. Procédé de mesure de position selon la revendication 20, dans lequel tous les messages provenant du terminal (400) sont transmis à l'entité (400) de détermination de position en passant par la station de base principale (201 ; 202) et la station de commande (300) lorsqu'un réseau à large bande sans fil est utilisé pour la transmission.

23. Procédé de mesure de position selon la revendication 18, dans lequel le message de réponse est transmis après qu'une valeur de code de son champ spécifié a été modifiée pour indiquer qu'il est destiné à une mesure de position.
